# EUROPÄISCHE PATENTANMELDUNG

(11) **EP 1 158 278 A1**
(43) Veröffentlichungstag der Anmeldung: **28.11.2001**
(21) Anmeldenummer: 01110732.3
(22) Anmeldetag: 03.05.2001
(51) Int. Cl.: G01F 1/28, G01P 5/04, F24F 11/00

(54) **Vorrichtung zum Überwachen eines Gebläses in einem Gasheizgerät**

(30) Priorität: 25.05.2000 DE 10026001
(71) Anmelder: ROBERT BOSCH GMBH, 70442 Stuttgart (DE)
(72) Erfinder: Wehmeier, Kersten, 73230 Kirchheim (DE)

(57) **Zusammenfassung**

Die Erfindung betrifft eine Vorrichtung zum Überwachen eines Gebläses in einem Gasheizgerät mit in einem Luft- bzw. Abgasweg des Gerätes angeordneten Sensor, der einen elektrischen Steuerstromkreis entsprechend der Gebläseförderung beeinflußt. Es wird vorgeschlagen, daß der Sensor ein dünnes, dehnbares Bauelement (16) mit einer vom Grad der Dehnung abhängigen elektrischen Eigenschaft ist, insbesondere ein Dehnungsmeßstreifen mit einer dehnungsabhängigen Widerstandscharakteristik. Dadurch ergibt sich eine einfache und robuste Ausführung, die weitgehend unempfindlich gegen Verschmutzung und Kondensatanfall ist.

## Beschreibung

### Stand der Technik

Die Erfindung geht aus von einer Vorrichtung zum Überwachen eines Gebläses in einem Gasheizgerät nach der Gattung des Hauptanspruchs. Es ist bekannt, im Luft- bzw. Abgasweg eine schwenkbar gelagerte Klappe anzuordnen, die durch den Strömungsdruck bewegbar ist und ihre Bewegungen auf ein Potentiometer im elektrischen Steuerstromkreis überträgt. Diese Anordnung hat gegeneinander bewegte Teile, die die bekannten Probleme bezüglich Langzeitstabilität und Verschmutzung aufweisen.

### Vorteile der Erfindung

Die erfindungsgemäße Anordnung mit den kennzeichnenden Merkmalen des Hauptanspruchs ist weitgehend unempfindlich gegen Verschmutzung und auch insofern vorteilhaft, weil sie keiner Abnutzung unterliegt. Wegen ihres sehr einfachen und robusten Aufbaus, ist die erfindungsgemäße Anordnung besonders für jene Anwendungsfälle geeignet, bei denen nur detektiert werden soll, ob eine Luft- bzw. Abgasströmung vorhanden ist oder nicht. Gegenüber den weit verbreiteten Überwachungseinrichtungen für die Gebläsefunktion mit einer feststehenden Blende im Strömungskanal und einer vor und hinter der Blende an den Strömungskanal angeschlossenen Druckdose hat die erfindungsgemäße Anordnung den weiteren Vorteil, daß sie unempfindlichen gegen Kondensatanfall ist.

Bei einer bevorzugten Ausführung ist der Sensor ein Dehnungsmeßstreifen, der eine dehnungsabhängige elektrische Widerstandscharakteristik hat und an einem einseitig an der Wand des Luft- bzw. Abgasweges eingespannten Träger befestigt ist.

### Zeichnung

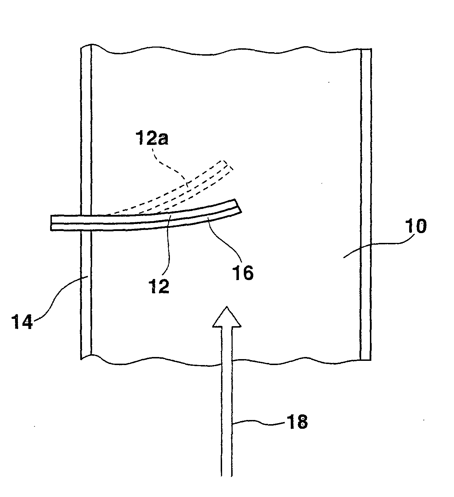

Ein Ausführungsbeispiel der Erfindung ist in der einzigen Figur der Zeichnung dargestellt und in der nachfolgenden Beschreibung näher erläutert.

### Ausführungsbeispiel

In einem Luftkanal 10 ist ein in Grenzen federnd biegbares Element (Biegebalken) 12 einseitig an der Kanalwand 14, quer in den Luftkanal 10 hineinragend, festgespannt. Auf dem Biegebalken 12 ist ein Dehnungsmeßstreifen 16 befestigt, der eine dehnungsabhängige elektrische Widerstandscharakteristik hat und in einem nicht dargestellten elektrischen Steuerstromkreis liegt, der auch ein in den Luftkanal 10 förderndes Gebläse überwacht.

Bei Fehlen der Luftströmung nimmt das Biegebalken 12 die mit vollen Linien dargestellte Lage ein, in welcher der Dehnungsmeßstreifen 16 seine kürzeste Länge hat. Bei vorhandener Luftströmung 18 wird der Biegebalken 12 durch den Strömungsdruck in die gestrichelte Stellung 12a verformt. Dabei wird der Dehnungsmeßstreifen 16 soweit gedehnt, das sich sein elektrischer Widerstand um einen auswertbaren, das Vorhandensein der Strömung detektierenden Wert ändert.

## Patentansprüche

1. Vorrichtung zum Überwachen eines Gebläses in einem Heizgerät, mit einem im Luft- bzw. Abgasweg des Gerätes angeordneten Sensor, der einen elektrischen Steuerstromkreis entsprechend der Gebläseförderung beeinflußt, **dadurch gekennzeichnet, daß** der Sensor ein dünnes, dehnbares Bauelement (16) mit einer vom Grad der Dehnung abhängigen elektrischen Eigenschaft ist.

2. Vorrichtung nach Anspruch 1, **dadurch gekennzeichnet, daß** das Bauelement (16) flächig auf einen quer in die Strömung hineinragenden und vom Strömungsdruck verformbaren Träger (12) aufgebracht ist.

3. Vorrichtung nach Anspruch 2, **dadurch gekennzeichnet, daß** der Träger (12) einseitig an einer Wand (14) eines Luft-bzw. Abgaskanals 10 eingespannt ist.

4. Vorrichtung nach Anspruch 1, **dadurch gekennzeichnet, daß** der Sensor ein Dehnungsmeßstreifen mit einer dehnungsabhängigen elektrischen Widerstandscharakteristik ist.
